# FASCICULE DE BREVET EUROPEEN

(11) **EP 0 608 173 B1**
(45) Date de publication et mention de la délivrance du brevet: **25.06.1997**
(21) Numéro de dépôt: 94400108.0
(22) Date de dépôt: 18.01.1994
(51) Int. Cl.: G11B 5/37

(54) **Procédé de réalisation d'une tête magnétique à détecteur de champ à semiconducteur et tête obtenue par ce procédé**
Verfahren zur Herstellung eines Magnetkopfes mit Halbleiter-Feld-Detektor und auf diese Weise hergestellter Kopf
Process for the fabrication of a magnetic head with a semiconductor field detector and head obtained by this process

(30) Priorité: 20.01.1993 FR 9300533
(43) Date de publication de la demande: 27.07.1994
(73) Titulaire: SILMAG, F-38041 Grenoble Cédex (FR)
(72) Inventeur: Lazzari, Jean-Pierre, F-38700 Corenc (FR)
(74) Mandataire: Signore, Robert

(56) Documents cités:
- EP-A- 0 443 941
- DE-A- 2 337 239

## Description

### Domaine technique

La présente invention a pour objet une tête magnétique à détecteur de champ à semiconducteur et une tête obtenue par ce procédé.

La tête magnétique de l'invention est soit à lecture seule, soit à lecture et à écriture.

Elle trouve une application dans l'enregistrement magnétique, quel que soit le support : bande, disque rigide, disque souple etc.

### Etat de la technique antérieure

La tête magnétique de l'invention est du type général à structure planaire et à couches minces. De telles têtes sont bien connues et sont décrites notamment dans les demandes de brevets européens EP-A-152 326 et EP-A-262 028 (ou son correspondant américain US-A-4 837 924).

Pour accroître la capacité de stockage des informations sur des pistes lues par de telles têtes, on a réduit la largeur de ces pistes. Par ailleurs, la vitesse de défilement de la couche d'enregistrement, face à la tête de lecture, a diminué également. Pour cette double raison, le signal de lecture engendré par un enroulement conducteur, a vu son intensité décroître.

Pour remédier à cet inconvénient, il a été proposé d'utiliser un élément magnétorésistant placé dans le/ou à proximité du circuit magnétique, afin de lire les variations du flux magnétique. Cet élément est en général une couche ferromagnétique, le plus souvent en fer-nickel.

Une telle tête à élément magnétorésistant est décrite dans la demande de brevet français FR-A-2 645 314. La figure 1 annexée montre, en coupe, les moyens essentiels d'une tête de ce type. Telle que représentée, la tête comprend un substrat 10, par exemple en silicium, dans lequel un caisson a été gravé. On a fait croître dans ce caisson, par électrolyse, une couche magnétique horizontale 12, prolongée par deux piliers verticaux 13. Un bobinage d'écriture 14 a également été formé, qui entoure les piliers 13. Ce bobinage est noyé dans une couche isolante 16. Un élément magnétorésistant 22 est ensuite formé, puis une couche magnétique supérieure 18 avec un espaceur amagnétique 20.

Dans une telle tête, le signal de lecture est prelevé aux bornes de l'élément magnétorésistant 22.

Bien que donnant satisfaction à certains égards, ces dispositifs présentent des inconvénients. En effet, les variations de résistance de l'élément magnétorésistant sont sensiblement quadratiques, de sorte que, pour obtenir une réponse linéaire, il faut appliquer à l'élément magnétorésistant un champ magnétique continu afin que soit polarisée l'aimantation de la couche ferromagnétique. L'aimantation se trouve en général dirigée à 45° des lignes de courant traversant l'élément.

Cette exigence complique singulièrement la mise en oeuvre de ce moyen de lecture.

En outre, le signal de lecture, prélevé aux bornes de l'élément magnétorésistant, est fortement perturbé par les changements de l'état magnétique de la couche. En effet, celle-ci est souvent brisée en domaines, lesquels produisent des variations brusques d'aimantation lorsque leurs parois se déplacent ou se déforment. Ces variations brusques se traduisent par un bruit important dans le signal de lecture.

Enfin et surtout, la couche magnétique mince voit ses caractéristiques varier en fonction du champ à détecter. Si le champ appliqué est trop important, la couche est saturée et la sensibilité de la lecture tombe rapidement.

On peut renoncer aux couches magnétorésistantes et adopter un autre type de moyen sensible au champ magnétique, comme les capteurs à effet HALL par exemple. C'est ce qui est préconisé, par exemple, dans le document EP-A-0 443 941 délimitant la forme en deux parties des revendications 1 et 17. Dans ce document, le circuit magnétique est formé en deux temps, un premier temps dans lequel on forme la couche magnétique inférieure et les moitiés inférieures des piliers, et un second temps dans lequel on forme les moitiés supérieures des piliers et les pièces polaires. Les capteurs à effet HALL sont constitués lors d'une opération intermédiaire, et sont placés entre les deux moitiés des piliers.

Ce procédé présente un inconvénient car la formation du capteur requiert de hautes températures, qui risquent d'endommager la partie inférieure du circuit magnétique déjà formée.

La présente invention a justement pour but de remédier à cet inconvénient.

### Exposé de l'invention

A cette fin, l'invention préconise de commencer par réaliser le ou les capteur(s) à semiconducteur sur un substrat en silicium, ce qui requiert l'usage de hautes températures, puis de bâtir autour de ce capteur, le circuit magnétique propre à la tête.

De façon précise, la présente invention a pour objet un procédé de réalisation d'une tête magnétique de lecture, qui est caractérisé par le fait qu'il comprend les opérations suivantes :
- on part d'un substrat en silicium,
- dans une première phase, on réalise, sur une face de ce substrat, au moins un capteur à semiconducteur sensible au champ magnétique,
- dans une seconde phase, on forme, sur la même face du substrat et autour du capteur, un circuit magnétique comprenant une couche magnétique inférieure parallèle au substrat, deux piliers magnétiques perpendiculaires au substrat et une couche magnétique supérieure parallèle au substrat, en appui sur les deux piliers et avec un entrefer.

Deux variantes sont prévues, selon que le capteur est sensible à un champ magnétique perpendiculaire ou à un champ parallèle.

Selon un mode de réalisation simple, on ne réalise qu'un seul capteur. Mais il est possible d'en réaliser deux.

Le procédé de l'invention vise avant tout la réalisation d'une tête magnétique de lecture. Mais il peut être complété par la formation d'un enroulement conducteur pour obtenir une tête qui fonctionne aussi en écriture.

La présente invention a également pour objet une tête magnétique selon la revendication 18. Cette tête est obtenue par le procédé qui vient d'être défini.

### Brève description des dessins

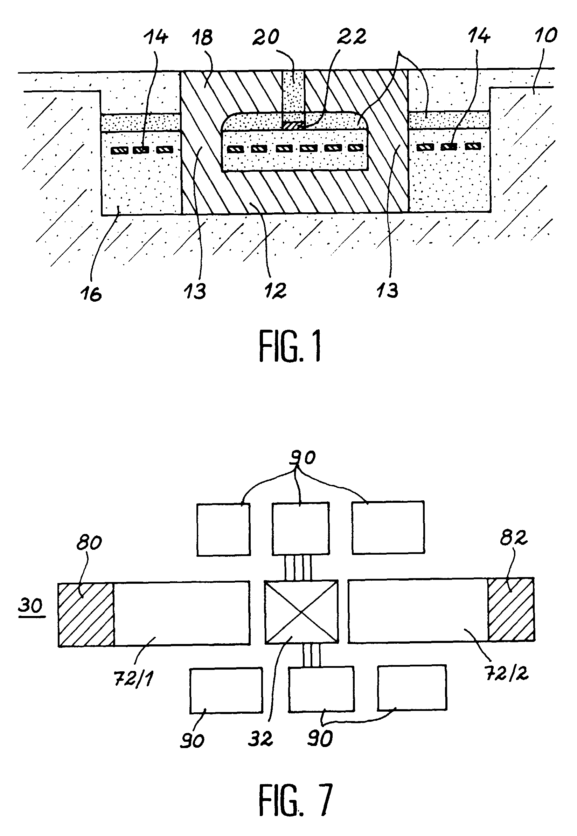

- la figure 1, déjà décrite, montre une tête planaire avec magnétorésistance, selon l'art antérieur ;
- les figures 2a à 2i illustrent différentes phases de réalisation d'une tête magnétique selon une variante de l'invention ;
- la figure 3 montre, de manière schématique, la traversée du capteur par les lignes de champ, dans une variante à capteur sensible à un champ vertical ;
- les figures 4a et 4b illustrent une variante à deux capteurs ;
- les figures 5a à 5d illustrent différentes phases de réalisation d'une tête magnétique selon encore une autre variante de l'invention ;
- les figures 6a à 6d illustrent différentes phases de réalisation d'une tête magnétique selon encore une autre variante de l'invention à capteur sensible à un champ horizontal ;
- la figure 7 montre, en vue de dessus, un sous-ensemble avec son capteur et ses moyens de mise en oeuvre ;
- la figure 8 illustre un capteur du type cellule de HALL en technologie intégrée bipolaire ;
- la figure 9 illustre un capteur du type cellule de HALL en configuration verticale en technologie CMOS ;
- la figure 10 illustre un capteur du type magnétotransistor à structure MOS à canal N ;
- la figure 11 illustre un capteur du type magnétotransistor à double drains.

### Exposé détaillé de modes de réalisation

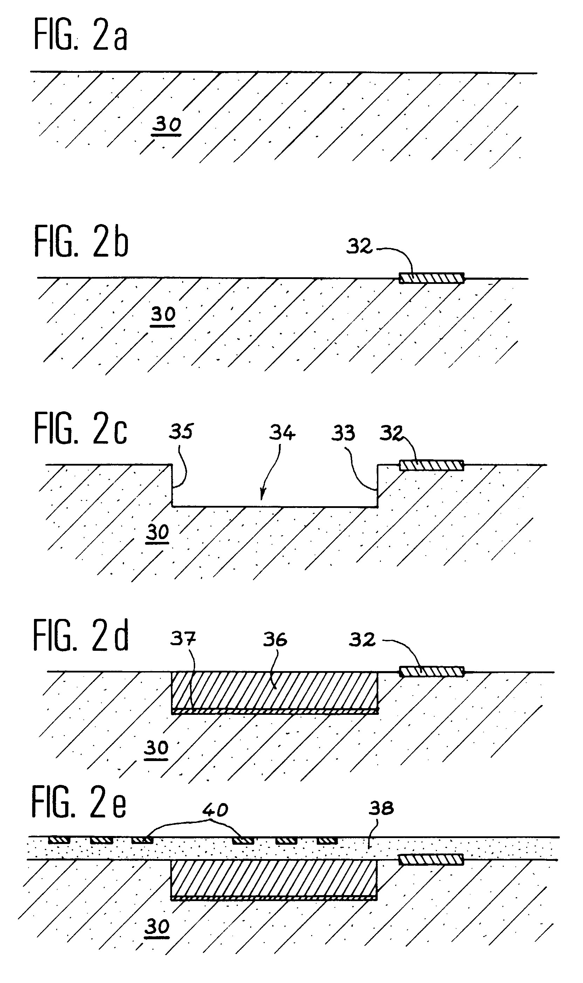

Les figures 2a à 2i illustrent quelques étapes d'une première variante de mise en oeuvre du procédé dans laquelle on réalise un seul capteur semiconducteur sensible à un champ magnétique parallèle au plan du capteur.

On part d'un substrat 30 en siliciium monocristallin (fig. 2a).

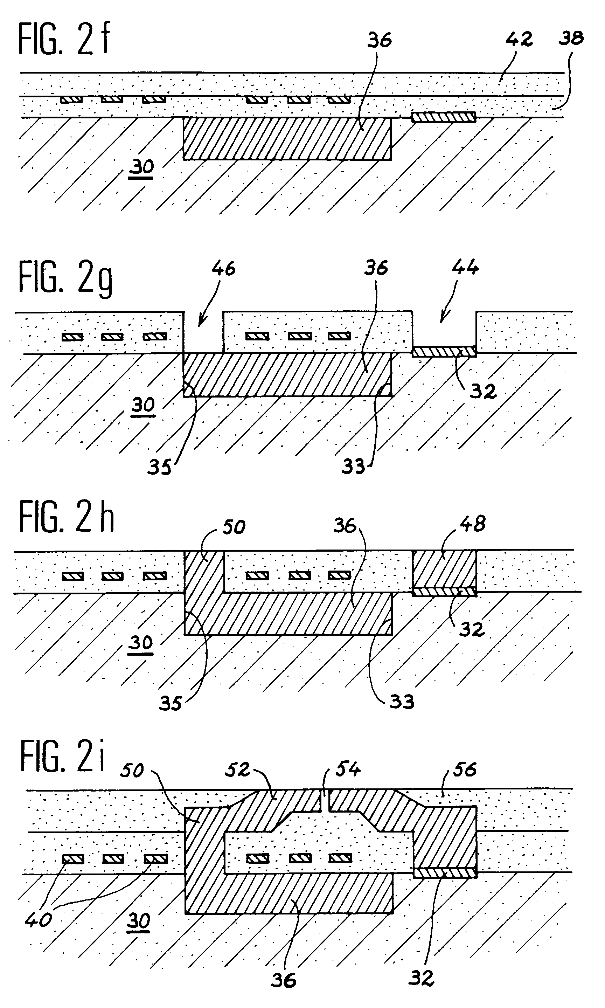

On dépose, sur la face supérieure de ce substrat, un capteur semiconducteur 32 (fig. 2**b**).

Puis on creuse un caisson 34 dans le substrat 30, avec une première extrémité 33 située à proximité du capteur 32 et une autre extrémité 35 éloignée du capteur 32 (fig. 2c).

Dans ce caisson 34, on forme la couche magnétique inférieure 36 (fig. 2d). Pour ce faire, et selon un processus connu on peut déposer une couche métallique 37 au fond du caisson et faire croître la couche 36 électrolytiquement en prenant la couche 37 comme électrode.

Dans le cas où l'on veut obtenir non seulement une tête de lecture mais aussi une tête d'écriture, on forme un enroulement conducteur en déposant une couche isolante 38, par exemple en silice, en gravant une spirale dans cette couche et en comblant cette spirale par un métal. On obtient ainsi un enroulement spiralé 40 qui, de préférence, se referme sur le côté opposé au capteur 32 (fig. 2e).

On dépose ensuite une seconde couche isolante 42, par exemple en silice, pour enterrer complètement l'enroulement 40 (fig. 2f).

On grave deux ouvertures 44 et 46 dans les isolants 38 et 42, la première au-dessus du capteur 32, la seconde au-dessus de l'extrémité 35 de la couche magnétique inférieure 36 (fig. 2g).

On forme alors, par exemple par croissance électrolytique, un premier pilier magnétique 48 sur le capteur 32 et un second pilier magnétique 50 sur l'extrémité 35 de la couche magnétique (fig. 2**h**).

Sur ces deux piliers 48, 50, on réalise enfin la couche magnétique supérieure 52 avec son entrefer 54 (fig. 2i).

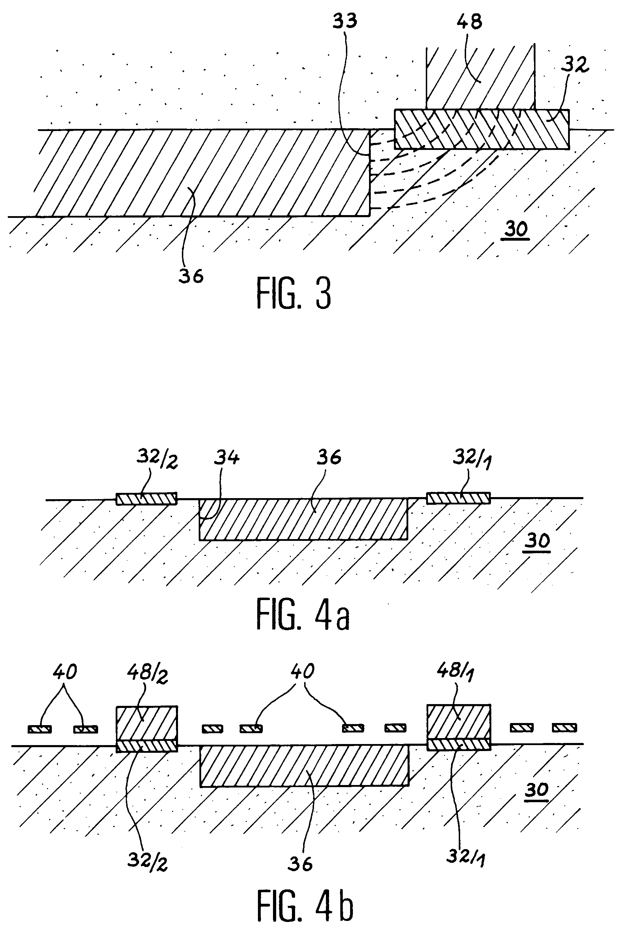

La figure 3 montre plus en détail la zone du capteur. Les lignes en interrompu représentent les lignes de champ magnétique entre l'extrémité 33 de la couche 36 et le pilier magnétique 48. Cette figure montre que le capteur est traversé par des lignes de champ qui, sans être rigoureusement perpendiculaires au plan du capteur, ont tout de même une composante perpendiculaire très importante.

Les figures 4a et 4b illustrent une variante à deux capteurs. Dans ce cas, le procédé comprend les opérations essentielles suivantes :
- on réalise, sur la face supérieure du substrat 30, deux capteurs 32/1, 32/2, écartés l'un de l'autre,
- on creuse un caisson 34 dans le substrat, entre les deux capteurs 32/1, 32/2,
- on forme la couche magnétique inférieure 36 dans ce caisson 34, (fig. 4a).

Par des opérations analogues à celles des figures 2g, 2h, on réalise ensuite deux piliers magnétiques 48/1, 48/22 au-dessus des deux capteurs 32/1, 32/2, (fig. 4b).

On terminera la tête, comme dans la variante précédente, en réalisant sur les deux piliers magnétiques 48/1, 48/2, la couche magnétique supérieure avec son entrefer (non représentés).

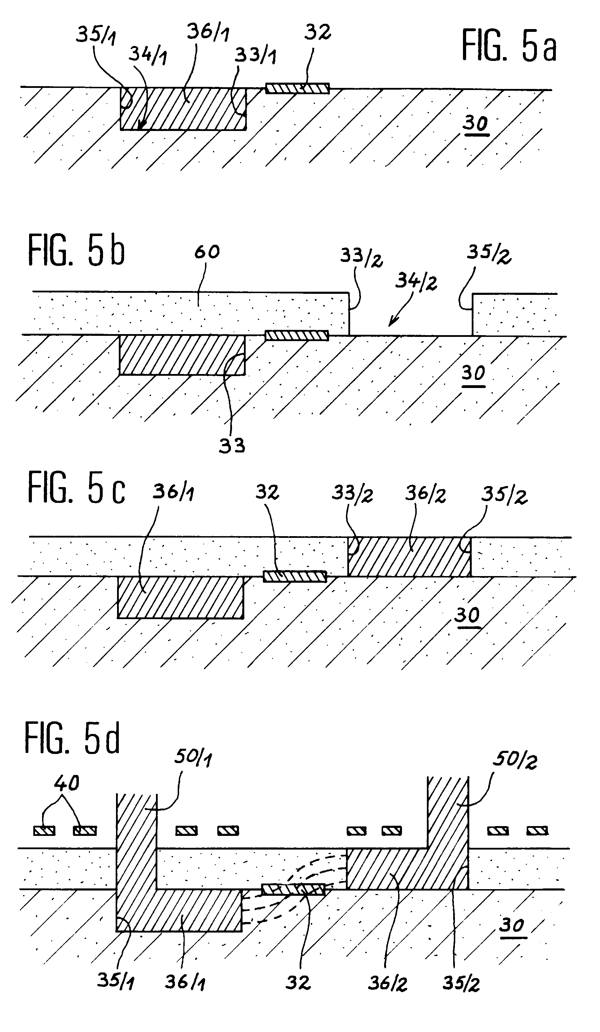

Les figures 5a à 5d illustrent une variante dans laquelle le capteur est disposé sensiblement au centre de la couche magnétique inférieure, au lieu d'être situé à l'une de ses extrémités. Dans cette variante :
- on réalise un seul capteur 32 à la surface du substrat 30,
- on creuse un premier caisson 34/1 dans le substrat 30 avec une première extrémité 33/1 située à proximité du capteur 32 et une seconde extrémité 35/1 éloignée du capteur 32,
- dans ce premier caisson 34/1 on forme une première portion 36/1 de la couche magnétique inférieure (fig. 5a).

On dépose ensuite sur l'ensemble une couche isolante 60 et l'on grave un second caisson 34/2 symétrique du premier par rapport au capteur 32. Ce second caisson a une première extrémité 33/2 située près du capteur et une seconde extrémité 35/2 éloignée du capteur (fig. 5b).

On forme ensuite, par exemple par croissance électrolytique, la seconde portion 36/2 de la couche magnétique inférieure (fig. 5c).

On forme deux piliers magnétiques 50/1, 50/2 aux deux extrémités 35/1, 35/2, éloignées du capteur (fig. 5d).

On réalisera enfin, sur ces deux piliers magnétiques 50/1, 50/2, la couche magnétique supérieure avec son entrefer (non représentés).

Dans les deux variantes des figures 4a, 4b, d'une part, et 5a à 5d d'autre part, on voit que l'enroulement conducteur 40 peut entourer les deux piliers magnétiques, en raison de la symétrie de la structure.

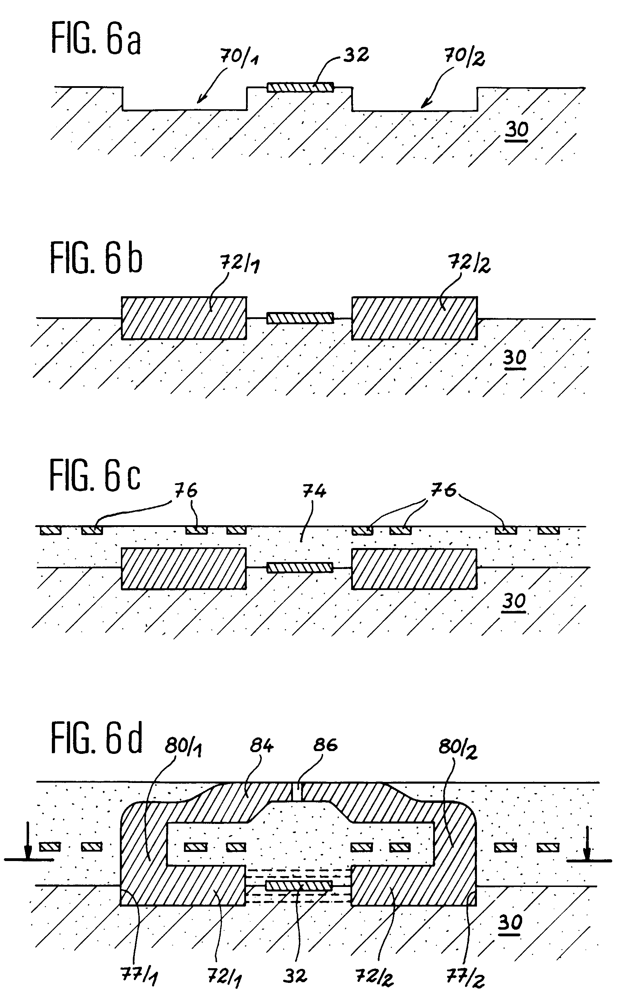

Dans les modes de mise en oeuvre qui viennent d'être illustrés, le capteur à semiconducteur travaille avec un champ magnétique qui est sensiblement perpendiculaire au plan du capteur. Dans le cas des figures 6a à 6d, d'une part, et 7, d'autre part, le capteur travaille au contraire avec un champ magnétique parallèle à son plan.

Pour obtenir une tête magnétique avec un tel capteur, on peut s'y prendre comme suit.

On commence par réaliser un capteur 32 de type horizontal sur le substrat en silicium 30. On creuse, de chaque côté du capteur 32, un premier et un second caissons 70/1, 70/2 ayant une certaine profondeur (fig. 6a).

On forme, dans ce premier et ce second caissons, une première et une seconde couches magnétiques, respectivement 72/1, 72/2. Ces couches ont chacune une épaisseur double de la profondeur du premier et du second caissons 70/1, 70/2, (fig. 6b).

On dépose ensuite un isolant 74 sur l'ensemble et on forme un enroulement conducteur 76 à double spirale (fig. 6c).

On creuse ensuite deux ouvertures dans l'isolant 74 au-dessus des extrémités 77/1, 77/2 des première et seconde couches 72/1, 72/2 qui sont opposées au capteur 32. On forme, dans ces ouvertures, deux piliers magnétiques 80/1 et 80/2. Le procédé s'achève par la réalisation, sur les deux piliers magnétiques 80/1, 80/2, d'une couche magnétique supérieure 84 avec son entrefer 86 (fig. 6d).

Dans ce mode de réalisation, le capteur 32 se trouve encadré par les deux pièces magnétiques 72/1, 72/2 et il est situé à mi-hauteur. Il est donc traversé par des lignes de champ magnétique qui passent horizontalement d'une pièce à l'autre (lignes interrompues sur la fig. 6d). Il fonctionne donc bien avec un champ parallèle à son plan.

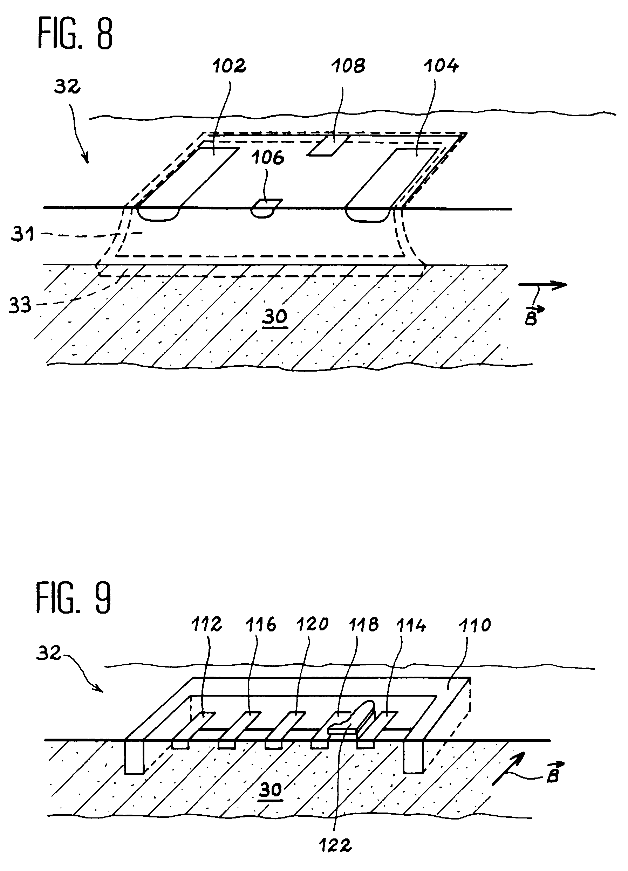

On voit, sur la figure 7, une vue de dessus selon la coupe marquée sur la figure 6d, passant par les piliers 80/1, 80/2. Le capteur 32 est montré entouré de divers moyens 90 représentés schématiquement et qui sont des contacts d'alimentation, des contacts de mesure, des circuits de polarisation etc.

La structure d'un capteur à semiconducteur est décrite plus en détail sur les figures 8 à 11. On peut rappeler que, en soi, chacun de ces dispositifs est connu. On pourra en trouver une description suivant leur mode de réalisation, dans les articles suivants :
- H.P. BALTES et R.S. POPOVIC
   "Integrated Semiconductor Magnetic-Field Sensor"
   Proc. IEEE, 74 (1986) 1107-1132.
- S. KORDIC
   "Integrated Silicon Magnetic-Field Sensors, Sensors and Actuators"
   Proc. IEEE, 10 (1986) 347-378.
- J.E. LENZ
   "A Review of Magnetic Sensors"
   Proc. IEEE, 78 (1990) 973-989.
- S. TAKAMIYA et K. FUJIKAWA
   "Differential Amplification Magnetic Sensor"
   IEEE Trans. Electr. Dev. ED-19 (1972) 1085-1090.
- R.S. POPOVIC
   "The Vertical HALL-Effect Device"
   IEEE Electr. Dev. Lett. EDL-5 (1984) 357-358.

Par ailleurs, ces capteurs ont fait l'objet d'une Thèse soutenue par Nathalie MATHIEU et intitulée "Etude de capteurs intégrés sur Si et GaAs pour la détection de champs magnétiques" thèse soutenue le 16 Juillet 1992 à l'Institut National Polytechnique de Grenoble.

La figure 8, tout d'abord, montre une cellule de HALL en technologie intégrée bipolaire. On y retrouve le substrat en silicium 30, en l'occurrence de type P, avec une couche épitaxiée 31 de type N. Cette couche est isolée par une couche appauvrie 33. Les amenées de courant s'effectuent par les deux contacts 102, 104 de type N⁺. La tension HALL, qui sera la tension de lecture délivrée par la tête, est prélevée sur des contacts latéraux 106, 108 également dopés N⁺.

On peut également utiliser, dans l'invention, une cellule de HALL associée à un amplificateur différentiel à deux transistors (appelé encore DAMS pour "Differential Amplification Magnetic Sensor"). La région à effet Hall est alors la base commune des transistors.

Ces capteurs sont sensibles à un champ appliqué perpendiculairement à leur plan. La figure 9 montre encore une cellule de HALL mais sensible cette fois, à un champ horizontal. Cette figure 9 correspond à une technologie CMOS. Le substrat 30 est en silicium de type N. Il est entouré d'un anneau de garde 110 de type P. Il comprend des contacts d'amenée de courant 112, 114 de type N⁺, des contacts de grille 116, 118 et un contact central 120 de prélèvement de la tension de lecture.

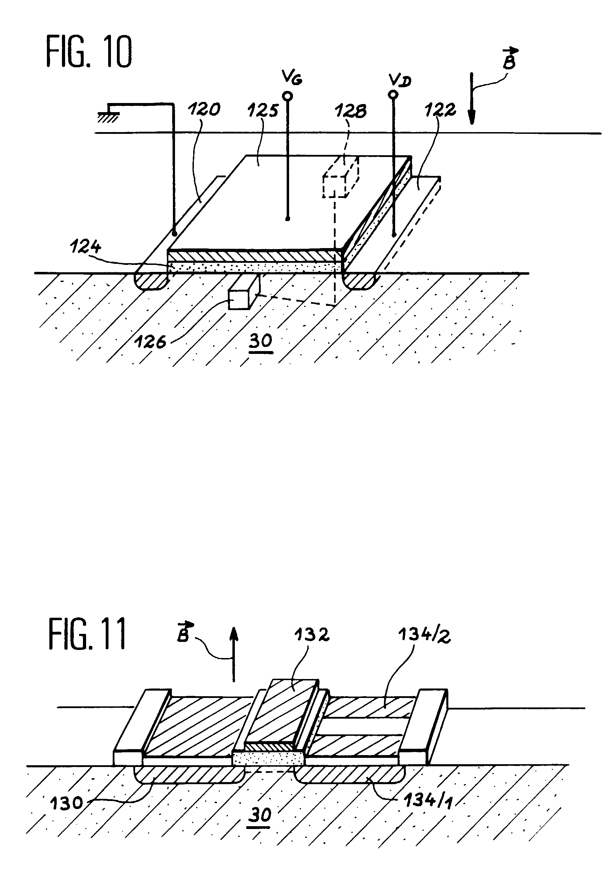

Les figures 10 et 11 se rapportent à des capteurs du type magnétotransistors. La figure 10, tout d'abord, montre une structure MOS à canal N. On y retrouve le substrat 30 en silicium de type P, une source 120 et un drain 122, tous deux de type N⁺, une couche isolante 124, une grille conductrice 125. Il comprend en outre deux contacts latéraux 126 dopés N⁺ sur lesquels est prélevée la tension de lecture, qui est fonction du champ magnétique appliqué. Ce champ est appliqué verticalement.

Sur la figure 11, le magnétotransistor possède encore une source 130 dopée N⁺, une grille 132 mais un drain dédoublé en deux parties 134/1, 134/2. Lorsqu'on applique un champ magnétique perpendiculaire au plan du dispositif, la symétrie des lignes de courant de drain est brisée. Le signal utile est formé par la différence des courants de drains.

## Revendications

1. Procédé de réalisation d'une tête magnétique de lecture, comprenant les opérations suivantes :
- on part d'un substrat en silicium (30), caractérisé par le fait que :
- dans une première phase, on réalise, sur une face de ce substrat (30), au moins un capteur à semiconducteur (32) sensible au champ magnétique,
- dans une seconde phase, on forme, sur la même face du substrat (30) et autour du capteur, un circuit magnétique comprenant une couche magnétique inférieure (36, 36/1, 36/2, 72/1, 72/2) parallèle au substrat, deux piliers magnétiques (48, 50, 80/1, 80/2) perpendiculaires au substrat (30) et une couche magnétique supérieure (52, 84) parallèle au substrat et en appui sur les deux piliers et avec un entrefer (54, 86).

2. Procédé selon la revendication 1, caractérisé par le fait qu'on réalise un capteur à semiconducteur (32) sensible à un champ magnétique dirigé sensiblement perpendiculairement au substrat (30).

3. Procédé selon la revendication 2, caractérisé par le fait que :
- on réalise un seul capteur (32) à la surface du substrat (30),
- on creuse un caisson (34) dans le substrat (30) avec une première extrémité (33) située à proximité du capteur (32) et une autre extrémité (35) éloignée du capteur (32),
- dans ce caisson (34), on forme la couche magnétique inférieure (36),
- on forme un premier pilier magnétique (48) sur le capteur (32) et un second pilier magnétique (50) sur l'extrémité (35) de la couche magnétique inférieure éloignée du capteur (32),
- on réalise, sur ces deux piliers 48, 50), la couche magnétique supérieure (52) avec son entrefer (54).

4. Procédé selon la revendication 2, caractérisé par le fait que :
- on réalise, sur la face du substrat (30), deux capteurs (32/1, 32/2), écartés l'un de l'autre,
- on creuse un caisson (34) dans le substrat, entre les deux capteurs (32/1, 32/2),
- on forme la couche magnétique inférieure (36) dans ce caisson (34),
- on réalise deux piliers magnétiques (48/1, 48/2) au-dessus des deux capteurs (32/1, 32/2),
- on réalise, sur ces deux piliers magnétiques (48/1, 48/2), la couche magnétique supérieure (52) avec son entrefer (54).

5. Procédé selon la revendication 2, caractérisé par le fait que :
- on réalise un seul capteur (32) à la surface du substrat (30),
- on creuse un caisson (34/1) dans le substrat (30) avec une première extrémité (33/1) située à proximité du capteur (32) et une seconde extrémité (35/1) éloignée du capteur (32),
- dans ce premier caisson (34/1) on forme une première portion (36/1) de la couche magnétique inférieure,
- sur le substrat (30) et symétriquement de cette première portion (36/1) par rapport au capteur (32), on forme une seconde portion (36/2) de la couche magnétique inférieure, avec une première extrémité (33/2) située à proximité du capteur (32) et une seconde extrémité (35/2) éloignée du capteur (32),
- on forme deux piliers magnétiques (50/1, 50/2) aux deux extrémités (35/1, 35/2) éloignées du capteur de la première (36/1) et de la seconde (36/2) portions de couche magnétique inférieure,
- on réalise, sur ces deux piliers magnétiques (50/1, 50/2) la couche magnétique supérieure (52) avec son entrefer (54).

6. Procédé selon l'une quelconque des revendications 2 à 5, caractérisé par le fait que l'on réalise un capteur de type cellule de HALL en partant d'un substrat (30) en silicium de type P, en formant, dans ce substrat (30), une couche de type N (31), en réalisant deux premiers contacts (102, 104) pour des amenées de courant et deux seconds contacts (106, 108) pour recueillir une tension de lecture.

7. Procédé selon la revendication 6, caractérisé par le fait que le capteur à cellule de HALL comprend en outre un amplificateur différentiel à deux transistors.

8. Procédé selon l'une quelconque des revendications 2 à 5, caractérisé par le fait que l'on réalise, sur un substrat (30) en silicium dopé P, un capteur du type magnéto-transistor MOS à effet de champ à effet HALL, avec une source (120) dopée N⁺, un drain (122) dopé N⁺, une couche isolante (124) et une grille conductrice (125).

9. Procédé selon la revendication 8, caractérisé par le fait que le magnétotransistor comprend deux contacts latéraux (126, 128) situés de part et d'autre du canal (124).

10. Procédé selon la revendication 8, caractérisé par le fait qu'on réalise un magnétotransistor à deux drains (134/1, 134/2).

11. Procédé selon l'une quelconque des revendications 2 à 5 caractérisé par le fait que l'on réalise un capteur du type magnétotransistor bipolaire.

12. Procédé selon la revendication 11, caractérisé par le fait que le magnétotransistor est du type latéral.

13. Procédé selon la revendication 1, caractérisé par le fait que l'on réalise un capteur à semiconducteur (32) sensible à un champ magnétique dirigé parallèlement au plan du substrat (30) sur lequel il est formé.

14. Procédé selon la revendication 13, caractérisé par le fait que :
- on réalise un seul capteur (32) sur le substrat (30),
- on creuse, de chaque côté du capteur (32), un premier et un second caissons (70/1, 70/2) ayant une certaine profondeur,
- on forme, dans ce premier (70/1) et ce second (70/2) caissons, une première (72/1) et une seconde (72/2) couches magnétiques ayant chacune une épaisseur double de la profondeur du premier et du second caissons (70/1, 70/2),
- sur les extrémités (77/1, 77/2) des première et seconde couches (72/1, 72/2) qui sont opposées au capteur (32), on forme deux piliers magnétiques (80/1, 80/2),
- on réalise, sur ces deux piliers magnétiques (80/1, 80/2), la couche magnétique supérieure (84) avec son entrefer (86).

15. Procédé selon l'une quelconque des revendications 13 et 14, caractérisé par le fait que l'on réalise un capteur du type HALL vertical en technologie MOS.

16. Procédé selon l'une quelconque des revendications 13 et 14, caractérisé par le fait que l'on réalise un capteur du type magnétotransistor vertical.

17. Procédé de réalisation d'une tête magnétique de lecture et d'écriture, caractérisé par le fait qu'il comprend les opérations du procédé selon l'une quelconque des revendications 1 à 16 avec, en outre, une opération de réalisation d'un enroulement conducteur (40) enterré dans un matériau isolant (38, 42) cet enroulement (40) entourant au moins l'un des deux piliers magnétiques (48, 50, 80/1, 80/2).

18. Tête magnétique de lecture à structure planaire susceptible d'être obtenue par le procédé selon l'une quelconque des revendications 1 à 16, comprenant :
- un substrat en silicium (30),
- un capteur à semiconducteur (32) sensible au champ magnétique,
- autour de ce capteur, un circuit magnétique formé par une couche magnétique inférieure (36, 36/1, 36/2, 72/1, 72/2) parallèle au substrat (30), deux piliers magnétiques (48, 50, 80/1, 80/2) perpendiculaires au substrat (30) et une couche magnétique supérieure (52, 84) en appui sur les deux piliers et parallèle au substrat (30) et avec un entrefer (54), caractérisée par le fait que le capteur à semiconducteur (32) est formé directement sur une face du substrat (30).

19. Tête magnétique selon la revendication 18, caractérisée par le fait qu'elle comprend, en outre, un enroulement conducteur (40) enterré dans un matériau isolant (38, 42) cet enroulement (40) entourant au moins l'un des piliers magnétiques (48, 50, 80/1, 80/2), la tête étant alors une tête de lecture et d'écriture.

## Patentansprüche

1. Verfahren zur Herstellung eines Lese-Magnetkopfs, folgende Schritte umfassend:
- man beginnt mit einem Siliciumsubstrat (30),
- stellt in einer ersten Phase auf einer Seite dieses Substrats (30) wenigstens einen magnetfeldempfindlichen Halbleiter-Sensor (32) her,
- bildet in einer zweiten Phase auf derselben Seite bzw. Fläche des Substrats (30) und um den Sensor herum einen magnetischen Kreis, der eine zum Substrat parallele untere Magnetschicht (36, 36/1, 36/2, 72/1, 72/2), zwei zum Substrat (30) senkrechte magnetische Pfeiler (48, 50, 80/1, 80/2) und eine zum Substrat parallele obere Magnetschicht (52, 84) umfaßt, die auf den beiden Pfeilern aufliegt und einen Spalt (54, 86) aufweist.

2. Verfahren nach Anspruch 1, dadurch gekennzeichnet, daß man einen Halbleitersensor (32) herstellt, der empfindlich ist für ein Magnetfeld, das im wesentlichen senkrecht zu dem Substrat (30) ausgerichtet ist.

3. Verfahren nach Anspruch 2, dadurch gekennzeichnet, daß:
- man einen einzigen Sensor (32) auf der Oberfläche des Substrats (30) herstellt,
- man in dem Substrat (30) eine Senke (34) herstellt, mit einem ersten, in der Nähe des Sensors (32) befindlichen ersten Ende (33) und einem vom Sensor (32) entfernten anderen Ende (35),
- man in dieser Senke (34) eine untere Magnetschicht (36) bildet,
- man einen ersten magnetischen Pfeiler (48) auf dem Sensor (32) bildet und einen zweiten magnetischen Pfeiler (50) auf dem entfernten Ende (35) der unteren Magnetschicht des Sensors (32),
- man auf diesen beiden Pfeilern (48, 50) die obere Magnetschicht (52) mit ihrem Spalt (54) bildet.

4. Verfahren nach Anspruch 2, dadurch gekennzeichnet, daß:
- man auf der Fläche des Substrats (30) zwei voneinander beabstandete Sensoren (32/1, 32/2) herstellt,
- man in dem Substrat eine Senke (34) herstellt, zwischen den beiden Sensoren (32/1, 32/2),
- man in dieser Senke (34) die untere Magnetschicht (36) bildet,
- man über den Sensoren (32/1, 32/2) zwei magnetische Pfeiler (48/1, 48/2) herstellt,
- man auf diesen beiden magnetischen Pfeilern (48/1, 48/2) die obere Magnetschicht (52) mit ihrem Spalt (54) herstellt.

5. Verfahren nach Anspruch 2, dadurch gekennzeichnet, daß
- man an der Oberfläche des Substrats (30) einen einzigen Sensor (32) herstellt,
- man in dem Substrat (30) eine Senke (34/1) herstellt, mit einem ersten, in der Nähe des Sensors (32) befindlichen Ende (33/1) und einem zweiten, von dem Sensor (32) entfernten Ende (35/1),
- man in dieser ersten Senke (34/1) ein erstes Teilstück (36/1) der unteren Magnetschicht bildet,
- man auf dem Substrat (30) und, bezogen auf den Sensor (32), symmetrisch zu diesem ersten Teilstück (36/1) ein zweites Teilstück (36/2) der unteren Magnetschicht bildet, mit einem ersten, in der Nähe des Sensors (32) befindlichen Ende (33/2) und einem zweiten, vom Sensor (32) entfernten Ende (35/2),
- man zwei magnetische Pfeiler (50/1, 50/2) an den beiden vom Sensor entfernten Enden (35/1, 35/2) des ersten (36/1) und des zweiten (36/2) Teilstücks der unteren Magnetschicht bildet,
- man auf diesen beiden magnetischen Pfeilern (50/1, 50/2) die obere Magnetschicht (52) mit ihrem Spalt (54) herstellt.

6. Verfahren nach einem der Ansprüche 2 bis 5, dadurch gekennzeichnet, daß man einen Sensor des Typs HALL-Zelle bzw. Hallsonde herstellt, ausgehend von einem Substrat (30) aus Silicium des Typs P, indem man in diesem Substrat (30) eine Schicht des Typs N (31) erzeugt und zwei erste Kontakte (102, 104) für Stromzuführungen und zwei zweite Kontakte (106, 108) für das Anlegen einer Lesespannung herstellt.

7. Verfahren nach Anspruch 6, dadurch gekennzeichnet, daß der HALL-Zellen-Sensor bzw. die Hallsonde außerdem einen Differentialverstärker mit zwei Transistoren umfaßt.

8. Verfahren nach einem der Ansprüche 2 bis 5, dadurch gekennzeichnet, daß man auf einem Substrat (30) aus P-dotiertem Silicium einen Sensor des Typs MOS-Feldeffekt-Magnetotransistor mit HALL-Effekt herstellt, mit einer N⁺-dotierten Source (120), einem N⁺-dotierten Drain (122), einer Isolierschicht (124) und einem leitenden Gate (125).

9. Verfahren nach Anspruch 8, dadurch gekennzeichnet, daß der Magnetotransistor zwei seitliche Kontakte (126, 128) umfaßt, beiderseits des Kanals (124) befindlich.

10. Verfahren nach Anspruch 8, dadurch gekennzeichnet, daß man einen Magnetotransistor mit zwei Drains (134/1, 134/2) herstellt.

11. Verfahren nach einem der Ansprüche 2 bis 5, dadurch gekennzeichnet, daß man einen Sensor des Typs bipolarer Magnetotransistor herstellt.

12. Verfahren nach Anspruch 11, dadurch gekennzeichnet, daß der Magnetotransistor vom Typ Lateraltransistor ist.

13. Verfahren nach Anspruch 1, dadurch gekennzeichnet, daß man einen Halbleitersensor (32) herstellt, der empfindlich ist für ein Magnetfeld, das im wesentlichen senkrecht zu dem Substrat (30) ausgerichtet ist, auf dem er gebildet wird.

14. Verfahren nach Anspruch 13, dadurch gekennzeichnet, daß :
- man auf dem Substrat (30) einen einzigen Sensor (32) herstellt,
- man, beiderseits des Sensors (32), eine erste und eine zweite Senke (70/1, 70/2) mit einer bestimmten Tiefe herstellt,
- man auf den dem Sensor (32) entgegengesetzten Enden (77/1, 77/2) der ersten und der zweiten Schicht (72/1, 72/2) zwei magnetische Pfeiler (80/1, 80/2) bildet,
- man auf diesen beiden magnetischen Pfeilern (80/1, 80/2) die obere Magnetschicht mit ihrem Spalt (86) bildet.

15. Verfahren nach einem der Ansprüche 13 und 14, dadurch gekennzeichnet, daß man einen vertikalen Sensor des HALL-Typs bzw. eine vertikale Hallsonde in MOS-Technik herstellt.

16. Verfahren nach einem der Ansprüche 13 und 14, dadurch gekennzeichnet, daß man einen vertikalen Sensor des Magnetotransistortyps herstellt.

17. Verfahren zur Herstellung eines Lese- und Schreibmagnetkopfs, dadurch gekennzeichnet, daß es die Operationen des Verfahrens nach einem der Ansprüche 1 bis 16 umfaßt, mit außerdem einer Operation zur Herstellung einer leitenden Wicklung (40), begraben in einem isolierenden Material (38, 42), wobei diese Wicklung (40) wenigstens einen der beiden magnetischen Pfeiler (48, 50, 80/1, 80/2) umgibt.

18. Lesemagnetkopf mit Planarstruktur, hergestellt durch das Verfahren nach einem der Ansprüche 1 bis 16, umfassend:
- ein Siliciumsubstrat (30),
- einen magnetfeldempfindlichen Halbleitersensor (32),
- um diesen Sensor herum einen magnetischen Kreis, gebildet durch eine untere Magnetschicht (36, 36/1, 36/2, 72/1, 72/2) parallel zum Substrat (30), zwei magnetische Pfeiler (48, 50, 80/1, 80/2) senkrecht zum Substrat 30 und eine obere Magnetschicht (52, 84), auf den beiden Pfeilern aufliegend, parallel zu dem Substrat (30) und mit einem Spalt (54), dadurch gekennzeichnet, daß der Halbleitersensor (32) direkt auf einer Fläche des Substrats (30) gebildet wird.

19. Magnetkopf nach Anspruch 18, dadurch gekennzeichnet, daß er außerdem eine leitende Wicklung (40) umfaßt, begraben in einem diese Wicklung (40) isolierenden Material (38, 42), wobei diese Wicklung (40) wenigstens einen der magnetischen Pfeiler (48, 50, 80/1, 80/2) umgibt und der Kopf dann ein Lese- und Schreibkopf ist.

## Claims

1. Process for the production of a magnetic reading head, comprising the following operations:
starting with a silicon substrate (30), characterized in that in a first phase at least one magnetic field sensitive semiconductor sensor (32) is produced on one face of said substrate (30), in a second phase formation takes place on the same substrate face and around the sensor (32) of a magnetic circuit incorporating a lower magnetic coating (36, 36/1, 36/2, 72/1, 72/2) parallel to the substrate (30), two magnetic posts (48, 50, 80/1, 80/2) perpendicular to the substrate (30) and an upper magnetic coating (52, 84) parallel to the substrate, being on the two posts and having a head gap (54, 86).

2. Process according to claim 1, characterized in that production takes place of a semiconductor sensor (32) sensitive to a magnetic field directed substantially perpendicular to the substrate (30).

3. Process according to claim 2, characterized in that:
a single sensor (32) is produced on the surface of the substrate (30),
a recess (34) is formed in the substrate (30) with a first end (33) located in the vicinity of the sensor (32) and a second end (35) remote from the sensor (32),
the lower magnetic coating (36) is formed in said recess (34),
a first magnetic post (48) is formed on the sensor (32) and a second magnetic post (50) on the end (35) of the lower magnetic coating remote from the sensor (32),
on said two posts (48, 50) is formed the upper magnetic coating (52) with its head gap (54).

4. Process according to claim 2, characterized in that:
two spaced sensors (32/1, 32/2) are formed on the face of the substrate (30), a recess (34) is formed in the substrate between the two sensors (32/1, 32/2), the lower magnetic coating (36) is formed in said recess (34),
two magnetic posts (48/1, 48/2) are produced above the two sensors (32/1, 32/2), the upper magnetic coating (52) with its head gap (54) is produced on these two magnetic posts (48/1, 48/2).

5. Process according to claim 2, characterized in that:
a single sensor (32) is produced on the surface of the substrate (30),
a recess (34/1) is formed in the substrate (30) with a first end (33/1) located in the vicinity of the sensor (32) and a second end (35/1) remote from the sensor (32),
in said first recess (34/1) is formed a first portion (36/1) of the lower magnetic coating,
on the substrate (30) and symmetrically of said first portion (36/1) with respect to the sensor (32) is formed a second portion (36/2) of the lower magnetic coating, with a first end (33/2) in the vicinity of the sensor (32) and a second end (35/2) remote from the sensor (32),
two magnetic posts (50/1, 50/2) are formed at the two ends (35/1, 35/2) remote from the sensor of the first (36/1) and the second (36/2) portions of the lower magnetic coating,
on said two magnetic posts (50/1, 50/2) is produced the upper magnetic coating (52) with its head gap (54).

6. Process according to any one of the claims 2 to 5, characterized in that a Hall cell-type sensor is produced by starting with a P-type silicon substrate (30) and forming in said substrate (30) a N-type coating (31), forming two first contacts (102, 104) for the power supplies and two second contacts (106, 108) for collecting a reading voltage.

7. Process according to claim 6, characterized in that the Hall cell sensor also comprises a differential amplification magnetic sensor.

8. Process according to any one of the claims 2 to 5, characterized in that on the P-doped silicon substrate (30) is produced a Hall field effect, MOS magnetotransistor-type sensor with a N⁺-doped source (120), a N⁺-doped drain (122), an insulating coating (124) and a conductive grid (125).

9. Process according to claim 8, characterized in that the magnetotransistor comprises two lateral contacts (126, 128) on either side of the channel (124).

10. Process according to claim 8, characterized in that a two drain magnetotransistor (134/1, 134/2) is produced.

11. Process according to any one of the claims 2 to 5, characterized in that a bipolar magnetotransistor-type sensor is produced.

12. Process according to claim 11, characterized in that the magnetotransistor is of the lateral type.

13. Process according to claim 1, characterized in that a semiconductor sensor (32) sensitive to a magnetic field parallel to the plane of the substrate (30) on which it is formed is produced.

14. Process according to claim 13, characterized in that:
a single sensor (32) is produced on the substrate (30),
on either side of the sensor (32) is formed a first and a second recesses (70/1, 70/2) having a certain depth,
in said first (70/1) and said second (70/2) recesses are formed a first (72/1) and a second (72/2) magnetic coatings each having a thickness which is twice the depth of the first and second recesses (70/1, 70/2),
on the ends (77/1, 77/2) of the first and second coatings (72/1, 72/2) opposite to the sensor (32) are formed two magnetic posts (80/1, 80/2),
on said two magnetic posts (80/1, 80/2) is produced the upper magnetic coating (84) with its head gap (86).

15. Process according to either of the claims 13 and 14, characterized in that a vertical Hall-type sensor is produced in MOS technology.

16. Process according to either of the claims 13 and 14, characterized in that a vertical magnetotransistor-type sensor is produced.

17. Process for the production of a magnetic read-write head, characterized in that it comprises the operations of the process according to any one of the claims 1 to 16 additionally with an operation of producing a conductor winding (40) buried in an insulating material (38, 42), said winding (40) surrounding at least one of the two magnetic posts (48, 50, 80/1, 80/2).

18. Planar structure magnetic read head obtained by the process according to any one of the claims 1 to 16, characterized in that the semiconductor sensor (32) is formed directly on one face of the substrate (30).

19. Magnetic head according to claim 18, characterized in that it also comprises a conductor winding (40) buried in an insulating material (38, 42), said winding (40) surrounding at least one of the two magnetic posts (48, 50, 80/1, 80/2), the head then being a read/write head.
